# EUROPEAN PATENT SPECIFICATION

(11) **EP 4 287 288 B1**
(45) Date of publication and mention of the grant of the patent: **19.08.2026**
(21) Application number: 22799032.2
(22) Date of filing: 21.04.2022
(51) Int. Cl.: H01M 4/04, B05C 9/12, B05C 5/02, H01M 4/139

(54) **APPARATUS FOR MANUFACTURING ELECTRODE, METHOD FOR MANUFACTURING ELECTRODE, AND ELECTRODE MANUFACTURED THEREBY**
ELEKTRODENHERSTELLUNGSVORRICHTUNG, ELEKTRODENHERSTELLUNGSVERFAHREN UND DAMIT HERGESTELLTE ELEKTRODE
APPAREIL DE FABRICATION D'ÉLECTRODE, PROCÉDÉ DE FABRICATION D'ÉLECTRODE ET ÉLECTRODE FABRIQUÉE PAR CE MOYEN

(30) Priority: 04.05.2021 KR 20210058201
(43) Date of publication of application: 06.12.2023
(73) Proprietor: LG Energy Solution, Ltd., Seoul 07335 (KR)
(72) Inventor: KIM, Tae Jong, Daejeon 34122 (KR); JUNG, Su Taek, Daejeon 34122 (KR); BAE, Sang Ho, Daejeon 34122 (KR)
(74) Representative: Plasseraud IP
(86) International application number: PCT/KR2022/005745
(87) International publication number: WO 2022/234987

(56) References cited:
- JP-A- 2013 211 145
- JP-A- 2013 211 145
- JP-A- 2017 084 609
- KR-A- 20130 085 828
- KR-A- 20140 132 808
- KR-A- 20150 051 046
- KR-A- 20210 035 667
- US-A1- 2002 182 483
- US-A1- 2011 091 754

## Description

### CROSS-REFERENCE TO RELATED APPLICATION

The present application claims the benefit of the priority of Korean Patent Application No. 10-2021-0058201, filed on May 04, 2021.

### TECHNICAL FIELD

The present invention relates to an apparatus for manufacturing an electrode, a method for manufacturing the electrode, and the electrode manufactured thereby, and more particularly, to an apparatus for manufacturing an electrode, in which an ion path is structurally forcibly formed in an electrode including a positive electrode or a negative electrode in a battery having a high capacity due to high electrode density to improve ion conductivity and reduce tortuosity, thereby realizing an high output even battery output characteristics and preventing an electrode collector (foil) from being changed in physical property due to heat in the above processes so that the electrode is stable, a method for manufacturing the electrode, and the electrode manufactured thereby.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

In particular, in terms of materials, there is a high demand for lithium secondary batteries such as lithium ion batteries and lithium ion polymer batteries having advantages such as high energy density, discharge voltage, and output stability.

In addition, as interest in environmental problems grows, a lot of studies is being conducted on electric vehicles and hybrid electric vehicles that are capable of replacing vehicles that use fossil fuels such as gasoline and diesel vehicles, which are one of the main causes of air pollution. Research and application of lithium secondary batteries with high energy density and discharge voltage as power sources for electric vehicles and hybrid electric vehicles are being actively conducted.

As described above, as demands for the lithium secondary batteries rapidly increase, and the usage time of the secondary batteries increases, the capacity of the secondary batteries increases, and the electrode density also increases. However, when the electrode density increases as the battery capacity increases, porosity decreases, and tortuosity increases to increase in lithium ion movement path, thereby decreasing in ion conductivity, and as a result, the output characteristics decrease. That is, in the secondary battery, the battery capacity and battery output are generally in a trade-off relationship.

However, as an area on which lithium ion secondary batteries are used increases, both factors of the high capacity and high output have to be considered, and thus, it is necessary to develop a battery capable of realizing a high output by forcibly increasing in ion conductivity.

As described above, when the electrode density is high, the porosity decreases, and the tortuosity also increases, and thus, the lithium ion path increases, and the ion conductivity also decreases. Thus, there is a need for methods for improving the output characteristics by forming a structural and forcible ion path to improve the ion conductivity.

There may be a method of forming a pattern that improves the ion conductivity by reducing the ion path with a laser, but it is difficult to be applied to the positive electrode when forming a laser pattern, and there is a problem due to a possibility that the physical properties of the electrode foil are changed due to high heat.

US 2011/091754 A1 discloses a process for forming grooves on an electrode active material layer.

JP 2017 084609 A discloses a method for manufacturing a solid-state battery, whereby an electrode active material is pressed by a concavo-convex shaped mold.

JP 2013 211145 A describes a power storage device, a secondary battery, and a method of manufacturing the power storage device.

D4 US 2002/182483 A1 discloses a method to prepare a battery electrode plate.

### DISCLOSURE OF THE INVENTION

### TECHNICAL PROBLEM

The present invention has been devised to solve the above problems, and an object of the present invention is to an apparatus for manufacturing an electrode, in which an ion path is structurally forcibly formed in an electrode including a positive electrode or a negative electrode in a battery having a high capacity due to high electrode density to improve ion conductivity and reduce tortuosity, thereby realizing an high output even battery output characteristics and preventing an electrode collector (foil) from being changed in physical property due to heat in the above processes so that the electrode is stable, a method for manufacturing the electrode, and the electrode manufactured thereby.

### TECHNICAL SOLUTION

The invention is as set out in the appended claims.

An apparatus for manufacturing an electrode according to the present invention includes a pattern formation mechanism configured to form a pattern groove in an electrode comprising an electrode collector and a coating part made of an electrode active material applied on at least one surface of the electrode collector, wherein the pattern formation mechanism presses a surface of the coating part to form an intaglio pattern groove in the coating part.

The pattern formation mechanism uses ultrasonic vibration in a process of forming the pattern groove.

The pattern groove may have at least one shape of a line type, a dot type, or a grid type in a plan view of the electrode.

The pattern formation mechanism may include a press tool having a pressing plane that is a plane disposed to face the coating part and a pressing protrusion protruding from the pressing plane toward the coating part, wherein the pressing protrusion may press the coating part to form the pattern groove, and the pressing protrusion may vibrate by the ultrasonic waves when forming the pattern groove.

The pattern formation mechanism may further include a lower support part configured to support the electrode at a lower portion of the electrode.

The pattern formation mechanism may include a roller tool having a rotation body rotating at a position spaced a predetermined distance from the coating part and a pressing protrusion protruding from an outer circumferential surface of the rotation body, wherein the pressing protrusion may press the coating part when the rotation body rotates to form the pattern groove, and the pressing protrusion may vibrate by the ultrasonic waves when forming the pattern groove.

The pattern formation mechanism may further include a lower support part configured to support the electrode at a lower portion of the electrode and moving in a direction from one side to the other side with respect to the rotation body.

The pattern formation mechanism may include a roller tool having a rotation body rotating at a position spaced a predetermined distance from the coating part and a pressing protrusion protruding from an outer circumferential surface of the rotation body, and a lower support part configured to support the electrode at a lower portion of the electrode and moving in a direction from one side to the other side with respect to the rotation body, wherein the pressing protrusion may press the coating part when the rotation body rotates to form the pattern groove, and the lower support part may vibrate by the ultrasonic waves when the pressing protrusion forms the pattern groove in the coating part.

The apparatus may further include a roller-shaped unwinder around which the electrode collector is wound, a transfer part configured to transfer the electrode collector unwound from the unwinder, a coater configured to apply an electrode active material on at least one surface of the electrode collector transferred by the transfer part to form a coating part, a drying part configured to dry the coating part through a drying mechanism, and a rolling part configured to roll the coating part via the drying part through a pair of rollers, wherein the pattern formation mechanism may press the coating part passing through the rolling part through the ultrasonic vibration to form the pattern groove in the coating part.

The apparatus may further include a roller-shaped rewinder configured to rewind the electrode in which the pattern groove is formed in the coating part by the pattern formation mechanism.

A method for manufacturing an electrode may include a pattern formation process of forming a pattern groove in an electrode comprising an electrode collector and a coating part made of an electrode active material applied on at least one surface of the electrode collector, wherein the pattern formation process may include a process of pressing a surface of the coating part to form an intaglio pattern groove in the coating part.

In the pattern formation process, ultrasonic vibration are used in the process of forming the pattern groove.

The apparatus may further include an unwinding process of unwinding a roll-shaped electrode collector; a transfer process of transferring the unwound electrode collector; a coating part formation process of applying an electrode active material on at least one surface of the electrode collector being transferred to form the coating part; a drying process of drying the coating part; and a rolling process of rolling the coating part that undergoes the drying process, wherein the pattern formation process may include a process of pressing the coating part that undergoes the rolling process through ultrasonic waves to form the pattern groove in the coating part.

The apparatus may further include a rewinding process of rewinding the electrode in which the pattern groove is formed in the coating part in the pattern formation process.

An electrode may include: an electrode collector; and a coating part made of an electrode active material applied on at least one surface of the electrode collector, wherein an intaglio pattern groove may be formed in the coating part, and a trace generated by ultrasonic vibration of a mechanism configured to form the pattern groove may be formed on an inner wall of the pattern groove.

The trace may include at least one of an uneven shape, a stepped stair shape, a wave pattern shape, or a zigzag shape in a cross-sectional view.

The pattern groove may have at least one shape of a line type, a dot type, or a grid type in a plan view.

### ADVANTAGEOUS EFFECTS

In the apparatus for manufacturing the electrode, the method for manufacturing the electrode, and the electrode manufactured thereby according to the present invention, the ion path may be structurally forcibly formed in the electrode including the positive electrode or the negative electrode in the battery having the high capacity due to the high electrode density to improve the ion conductivity and reduce the tortuosity, thereby realizing the high output even the battery output characteristics and preventing the electrode collector (foil) from being changed in physical property due to the heat in the above processes so that the electrode is stable.

### BRIEF DESCRIPTION OF THE DRAWINGS

FIG. 1 is a cross-sectional view illustrating a pattern formation mechanism of an apparatus for manufacturing an electrode according to Embodiment 1 of the present invention.
FIG. 2 is a view illustrating an example of an electrode manufactured by the apparatus for manufacturing the electrode according to Embodiment 1 of the present invention, wherein FIG. 2(a) is a plan view, and FIG. 2(b) is a perspective view.
FIG. 3 is a view illustrating another example of the electrode manufactured by the apparatus for manufacturing the electrode according to Embodiment 1 of the present invention, wherein FIG. 3(a) is a plan view, and FIG. 3(b) is a perspective view.
FIG. 4 is a plan view illustrating further another example of the electrode manufactured by the apparatus for manufacturing the electrode according to Embodiment 1 of the present invention.
FIG. 5 is a cross-sectional view comparing cutting of the electrode when ultrasonic waves are not oscillated to cutting of the electrode when the ultrasonic waves are oscillated, wherein FIG. 5(a) is a view when the ultrasonic waves are not oscillated, and FIG. 5(b) is a view when the ultrasonic waves are oscillated.
FIG. 6 is a schematic cross-sectional view illustrating the entire apparatus for manufacturing the electrode according to Embodiment 1 of the present invention.
FIG. 7 is a cross-sectional view illustrating a pattern formation mechanism of an apparatus for manufacturing an electrode according to Embodiment 2 of the present invention.
FIG. 8 is a cross-sectional view illustrating a pattern formation mechanism of an apparatus for manufacturing an electrode according to Embodiment 3 of the present invention.
FIG. 9 is a diagram illustrating each of processes in a method for manufacturing an electrode according to Embodiment 4 of the present invention.
FIG. 10 is a perspective view and partially enlarged view illustrating the electrode manufactured through the apparatus for manufacturing the electrode according to an embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

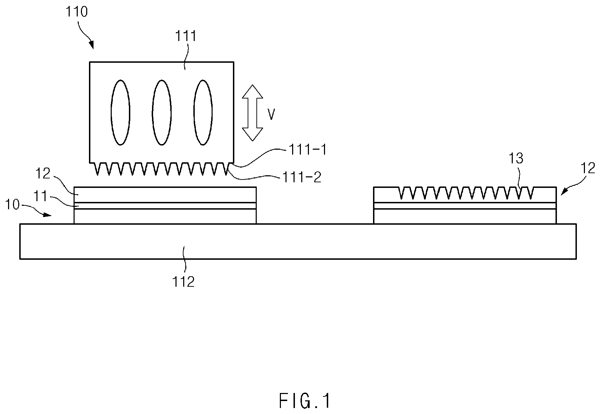

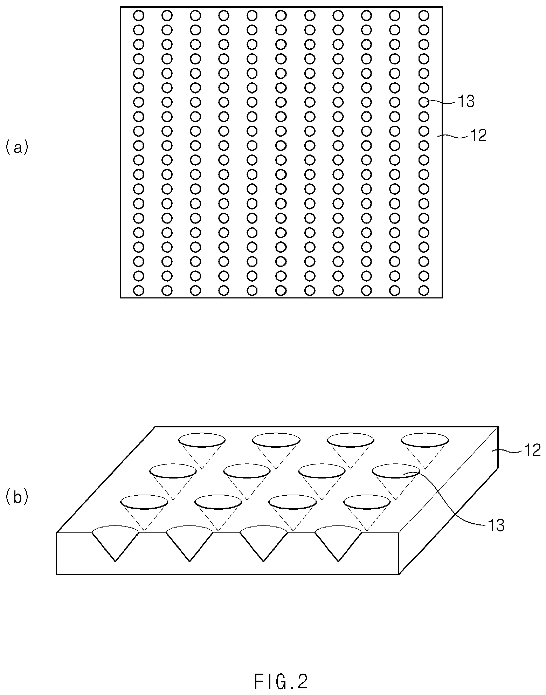

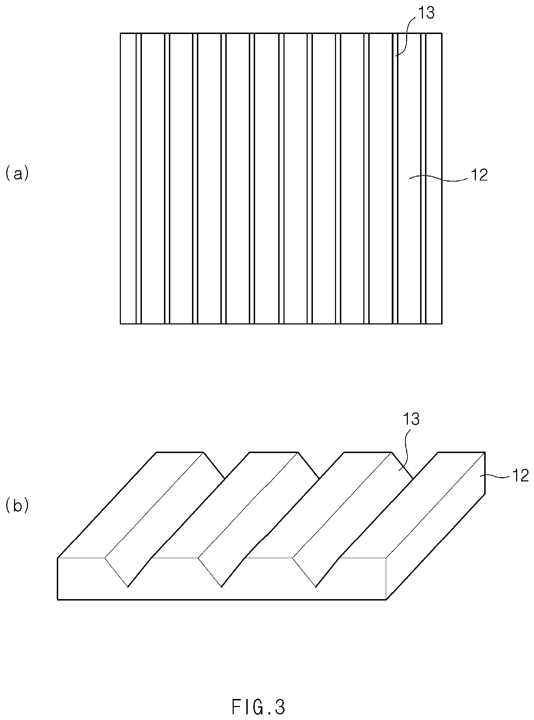

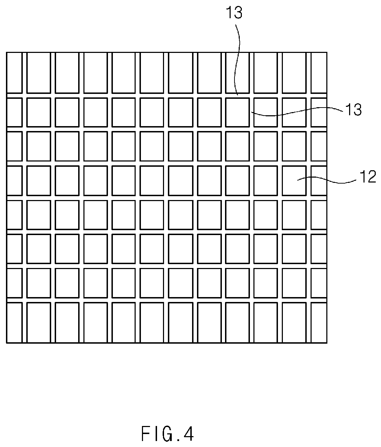

FIG. 1 is a cross-sectional view illustrating a pattern formation mechanism of an apparatus for manufacturing an electrode according to Embodiment 1 of the present invention. FIG. 2 is a view illustrating an example of an electrode manufactured by the apparatus for manufacturing the electrode according to Embodiment 1 of the present invention, wherein FIG. 2(a) is a plan view, and FIG. 2(b) is a perspective view. FIG. 3 is a view illustrating another example of the electrode manufactured by the apparatus for manufacturing the electrode according to Embodiment 1 of the present invention, wherein FIG. 3(a) is a plan view, and FIG. 3(b) is a perspective view. FIG. 4 is a plan view illustrating further another example of the electrode manufactured by the apparatus for manufacturing the electrode according to Embodiment 1 of the present invention.

Referring to FIG. 1, an apparatus for manufacturing an electrode 10 according to Embodiment 1 of the present invention includes a pattern formation mechanism 110 that forms a pattern groove 13 in a coating part 12 of the electrode 10. Specifically, the pattern formation mechanism 110 is configured to form the pattern groove 13 in the electrode 10 including an electrode collector 11 and a coating part 12 made of an electrode active material applied on at least one surface of the electrode collector 11. The pattern formation mechanism 110 is configured to form an intaglio pattern groove 13 in the coating part 12 by pressing a surface of the active material coating part 12. In addition, the pattern formation mechanism 110 uses ultrasonic vibration in the process of forming the pattern groove 13.

In the apparatus for manufacturing the electrode 10 according to Embodiment 1 of the present invention, as described above, the pattern groove 13 may be formed in the coating part 12 of the electrode 10 to structurally and forcibly form an ion path, thereby improving ion conductivity and reducing tortuosity so that output characteristics of the battery are realized at high output. If the electrode 10 in which the pattern groove 13 is formed is the electrode 10 of the battery having a high capacity due to a high density of the electrode 10, both two factors of the high capacity and the high output may be achieved through the apparatus for manufacturing the electrode 10 of the present invention.

In addition, in the apparatus for manufacturing the electrode 10 according to Embodiment 1 of the present invention, since the pattern groove 13 is formed without using a means that generates heat such as a laser, even physical properties of the electrode collector (foil) 11 may not be changed by the heat in the process of forming the pattern groove 13, and thus, the electrode 10 may be stably manufactured.

Referring to FIG. 1, the pattern formation mechanism 110 may include a press tool 111. In addition, the press tool 111 may include a pressing plane 111-1 and a pressing protrusion 111-2. The pressing plane 111-1 may be a plane disposed to face the coating part 12, and the pressing protrusion 111-2 may be a protrusion protruding from the pressing plane 111-1 toward the coating part 12. Also, when the press tool 111 moves in a direction of the electrode 10, the pressing plane 111-1 and the pressing protrusion 111-2 approach the electrode 10. Here, the pressing protrusion 111-2 may press the coating part 12 to form the pattern groove 13 in the coating part 12. In addition, in the apparatus for manufacturing the electrode 10 according to Embodiment 1 of the present invention, the pressing protrusion 111-2 may vibrate by ultrasonic waves when the pattern groove 13 is formed. A direction of the ultrasonic vibration of the pressing protrusion 111-2 is illustrated as reference symbol V in FIG. 1.

In this case, the press tool 111 itself may vibrate by the ultrasonic waves so that the pressing protrusion 111-2 vibrates by the ultrasonic waves, or only the pressing protrusion 111-2 may vibrate by the ultrasonic waves.

When the ultrasonic vibration is applied to the applied electrode 10 or the dried or rolled electrode 10, the pattern groove 13 may be formed in the electrode 10 in a low pressure manner through the pattern formation mechanism 110. In this case, a low tortuosity cell (LTC) having reduced tortuosity may be manufactured.

That is, when the pattern is formed by the ultrasonic waves, since a pressure applied to the electrode 10 is reduced due to the ultrasonic wave, unlike when the pattern is formed by the rolling (simple press), the density of the electrode 10 on the pattern surface may be locally lowered to improve the output characteristics.

In addition, the pattern formation mechanism 110 of the apparatus for manufacturing the electrode 10 according to Embodiment 1 of the present invention may further include a lower support part 112 that supports the electrode 10 at a lower side of the electrode 10. The lower support part 112 may serve to support the electrode 10 at the lower side of the electrode 10 when the press tool 111 presses the electrode 10. The lower support part 112 may be fixed or may move slowly in a transport direction of the electrode 10. When the lower support part 112 moves, since the pattern groove 13 is formed in the coating part 12 of the electrode 10 while the electrode 10 is being transported, production efficiency may be improved.

Referring to FIGS. 2 to 4, the pattern groove 13 formed in the coating part 12 of the electrode 10 by the apparatus for manufacturing the electrode 10 according to Embodiment 1 of the present invention is the electrode 10 may have at least one shape of a line type, a dot type, or a grid type in the plan view.

FIG. 2 is a view illustrating the electrode 10 in which the pattern groove 13 is formed in the dot shape. FIG. 2(a) is a plan view, and FIG. 2(b) is a perspective view. In the plan view of FIG. 2(a), small circular pattern grooves 13 may be arranged side by side in horizontal and vertical directions. This shape may be a regular shape. In addition, in the cross-sectional view of the pattern groove 13 illustrated in FIG. 2(b), the cross-sectional shape may be formed like a shape in which a cone is turned upside down.

FIG. 3 is a view illustrating the electrode 10 in which the pattern groove 13 is formed in the line shape. FIG. 3(a) is a plan view, and FIG. 3(b) is a perspective view. In the plan view of FIG. 3A, lines may be arranged in the vertical direction. The plurality of vertical lines may be formed to be spaced a predetermined interval from each other. This shape may be a regular shape. In addition, in the cross-sectional view of the pattern groove 13 illustrated in FIG. 3(b), the cross-sectional shape may be formed like a shape in which a triangle is turned upside down.

FIG. 4 is a view illustrating the electrode 10 in which the pattern groove 13 is formed in the grid shape. In the plan view, lines may be arranged in the vertical and horizontal directions. The vertical line and the horizontal line may have a shape that intersects each other, and in particular, may have a shape that intersects at 90 degrees. In addition, the plurality of vertical lines may be formed by being spaced a predetermined interval from each other, and the plurality of horizontal lines may also be formed by being spaced a predetermined interval from each other. This shape may be a regular shape. That is, if the line type of FIG. 3 is a type in which only the vertical lines or horizontal lines are formed, the grid type of FIG. 4 may be a type in which both the vertical and horizontal lines are formed.

The pattern groove 13 formed in the coating part 12 of the electrode 10 by the manufacturing apparatus of the electrode 10 according to Embodiment 1 of the present invention may have various shapes as described above. When the pattern groove 13 is formed in this manner, a wetting property of the electrolyte may be improved after the electrolyte is injected, and a surface area may be reduced during the lamination process for attaching the separator and the electrode 10, and thus, an applied pressure increases, and the lamination may be better.

In addition, an impregnation property may be advantageous in order of the dot type, the line type, and the grid type. Also, it may be advantageous in aspect of an amount of loading of the electrode active material in a reverse order, i.e., in order of the grid type, the line type, and the dot type. In this case, an effect of increasing in output characteristic when compared to a loss of the electrode 10 may also be advantageous.

The electrode 10 in which the pattern groove 13 is formed by the apparatus for manufacturing the electrode 10 according to Embodiment 1 of the present invention may be a positive electrode or a negative electrode. When the pattern groove 13 is formed in the positive electrode 10, greater force may be generated at a high output, and when the pattern groove 13 is formed in the negative electrode 10, an increase in fast charging performance may be expected.

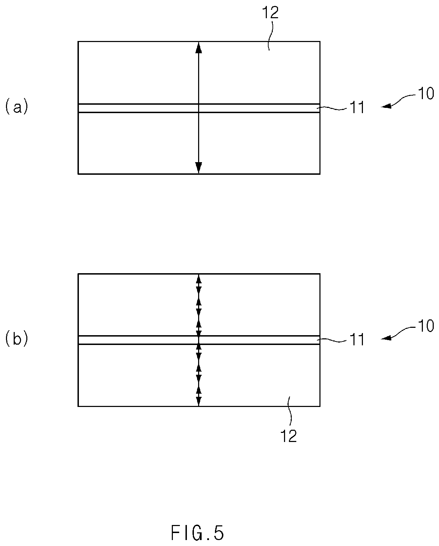

FIG. 5 is a cross-sectional view comparing cutting of the electrode 10 when ultrasonic waves are not oscillated to cutting of the electrode 10 when the ultrasonic waves are oscillated, wherein FIG. 5(a) is a view when the ultrasonic waves are not oscillated, and FIG. 5(b) is a view when the ultrasonic waves are oscillated.

Referring to FIG. 5, when external force is applied to cut the electrode 10 or to excavate a groove in the electrode 10, a form in which shock waves are transmitted into the electrode 10 is indicated by an arrow. Referring to FIG. 5(a), the ultrasonic waves are not oscillated, it is be seen that an impact of the cutting external force is transmitted at once over the entire thickness of the electrode 10, and thus a high pressure is applied to the electrode 10. In this case, a lot of deformation of the material may occur. Referring to FIG. 5(b), which illustrates a state in which the ultrasonic waves are oscillated, it is seen that the impact of the cutting external force is not transmitted over the entire thickness of the electrode 10 at once, but is divided into a plurality of short regions, and a small pressure is applied to each of the regions. In this case, the deformation of the material may be maintained to be minimized.

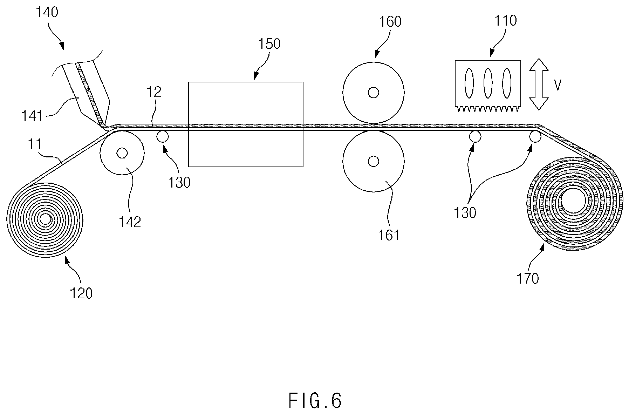

FIG. 6 is a schematic cross-sectional view illustrating the entire apparatus for manufacturing the electrode 10 according to Embodiment 1 of the present invention.

Referring to FIG. 6, the apparatus for manufacturing the electrode 10 according to Embodiment 1 of the present invention may further include an unwinder 120, a transfer part 130, a coating part 12, a drying part 150, and a rolling part 160 and may further include a rewinder 170 to be disposed later.

Referring to FIG. 6, the unwinder 120 may have a roller shape on which the electrode collector 11 is wound. The unwinder 120 may unwind the electrode collector 11 to transport the electrode collector 11 by the transfer part 130.

The transfer part 130 may receive the electrode collector 11 unwound from the unwinder 120 to transfer the electrode collector 11 up to the rewinder 170 via the coating part 12, the drying part 150, the rolling part 160, and the pattern formation mechanism 110.

Here, the transfer part 130 may be a roll. The electrode collector 11 may be transferred as a speed of 40 m/min to 80 m/min, specifically a speed of 60 m/min to 80 m/min by the transfer part 130.

The transfer speed of the electrode collector 11 may be commercially meaningful when being satisfied in a speed range. If the transfer speed is out of the range to proceed too fast, there is a problem when performing each process. For example, application or drying of electrode active material slurry or rolling of the coating part 12 may not be performed properly. On the other hand, if proceeding at a too slow speed, it may not be preferable because a commercially meaningful manufacturing speed of the electrode 10 is not obtained.

Next, the electrode collector 11 unwound from the unwinder 120 and transferred by the transfer part 130 is transferred to a coater 140 by the transfer part 130. The coater 140 forms the coating part 12 by applying the electrode active material slurry on at least one surface of the electrode collector 11. Here, the coater 140 is not limited as long as it may apply the electrode active material slurry, and the electrode active material slurry may be applied by a conventionally known coating device such as a coating die 141, a coating roll, or a slide-slot, but in FIG. 6, as an example, a structure in which the electrode active material slurry is applied through the coating die 141 is illustrated.

Specifically, the coater 140 may have a structure including the coating die 141 provided with an outlet slot so that the electrode active material slurry flows out toward the electrode collector 11, and a coater roll 142 that is disposed to be spaced a predetermined interval from the outlet slot of the die and transports the electrode collector 11 by rotation so that the electrode active material slurry is applied to the electrode collector 11 by the coating die 141.

Thereafter, the electrode collector 11 coated with the electrode active material slurry may be transferred to the drying part 150 by the transfer part 130.

The drying part 150 is not limited as long as it is a device capable of drying the coating part 12 by evaporating a solvent from the electrode active material slurry and may have any conventionally known structure.

When passing through the drying part 150, the dried coating part 12 in the form of the evaporation of the solvent may be formed on the electrode collector 11, and the coating part 12 may be rolled to have a proper porosity and a proper density of the electrode 10 through the rolling part 160.

The rolling part 160 is not limited in its device, structure, etc., as long as it has a form capable of rolling the coating unit 12, but, for example, the rolling part 160 may have a form of being rolled by adjusting an interval between a pair of rolling rollers 161.

Referring to FIG. 6, the pattern formation mechanism 110 may press the coating part 12 via the rolling part 160 through the ultrasonic vibration to form the pattern groove 13 in the coating part 12.

In addition, the apparatus for manufacturing the electrode 10 according to Embodiment 1 of the present invention may further include a rewinder 170 disposed behind the pattern formation mechanism 110. The rewinder 170 may have a roller-shaped configuration that rewinds the electrode 10, in which the pattern groove 13 is formed in the coating part 12 by the pattern formation mechanism 110, in the form of a roll. The rewinder 170 may have the same or similar shape as the unwinder 120.

### Embodiment 2

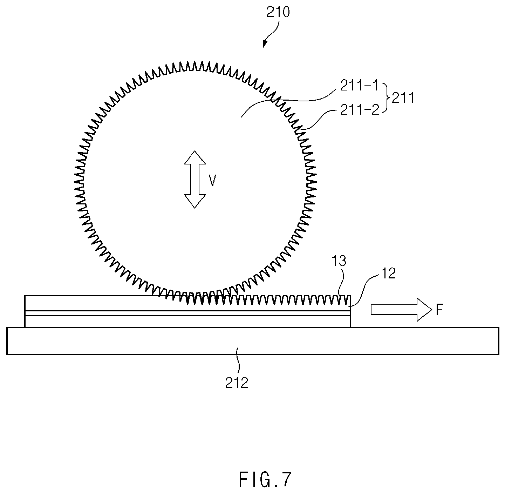

FIG. 7 is a cross-sectional view illustrating a pattern formation mechanism of an apparatus for manufacturing an electrode according to Embodiment 2 of the present invention.

Embodiment 2 of the present invention is different from Embodiment 1 in that a pattern groove is formed in an electrode by using a roller tool 211 instead of the press tool.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

Referring to FIG. 7, a pattern formation mechanism 210 of the apparatus for manufacturing an electrode according to Embodiment 2 of the present invention may include a roller tool 211. In addition, the roller tool 211 may include a rotation body 211-1 and a pressing protrusion 211-2.

The rotation body 211-1 may be disposed to rotate by a predetermined distance from a coating part of the electrode. Also, the pressing protrusion 211-2 may have a protrusion shape protruding from an outer circumferential surface of the rotation body 211-1.

The pressing protrusion 211-2 may be configured to form a pattern groove by pressing the coating part when the rotation body 211-1 rotates. The pressing protrusion 211-2 may vibrate by ultrasonic waves when the pattern groove is formed. A direction of the ultrasonic vibration of the pressing protrusion 211-2 is illustrated as reference symbol V in FIG. 7.

In this case, the roller tool 211 itself may vibrate by the ultrasonic waves so that the pressing protrusion 211-2 vibrates by the ultrasonic waves, or only the pressing protrusion 211-2 may vibrate by the ultrasonic waves.

When the ultrasonic vibration is applied to the applied electrode or the dried or rolled electrode 10, the pattern groove may be formed in the electrode in a low pressure manner through the pattern formation mechanism 210. In this case, a low tortuosity cell (LTC) having reduced tortuosity may be manufactured.

That is, when the pattern is formed by the ultrasonic waves, since a pressure applied to the electrode is reduced due to the ultrasonic wave, unlike when the pattern is formed by the rolling (simple press), the density of the electrode on the pattern surface may be locally lowered to improve the output characteristics.

In addition, the pattern formation mechanism 210 of the apparatus for manufacturing the electrode according to Embodiment 1 of the present invention may further include a lower support part 212 that supports the electrode at a lower side of the electrode. The lower support part 212 may serve to support the electrode at a lower portion of the electrode when the roller tool 211 presses the electrode.

Also, the lower support part 212 may support the electrode on the lower portion of the electrode and may move in a direction F from one side to the other side with respect to the rotation body 211-1. In this case, the lower support part 212 may move in synchronization with a rotation speed of the rotation body 211-1. Of course, the lower support part 212 may be fixed as necessary, but it may be more efficient if the lower support part 212 is moving rather than being fixed. When the lower support part 212 moves, a pattern groove may be formed in the coating part of the electrode while the electrode is being transferred, thereby improvising production efficiency.

### Embodiment 3

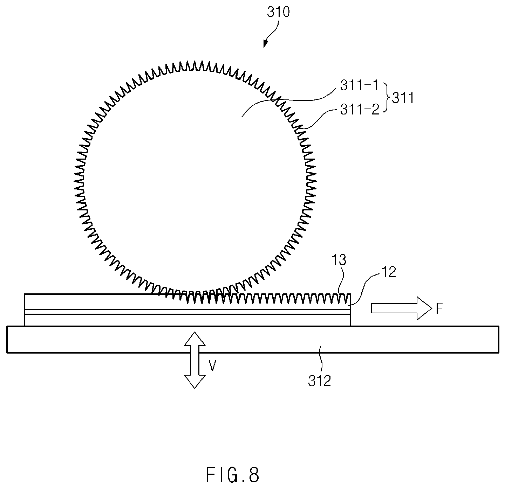

FIG. 8 is a cross-sectional view illustrating a pattern formation mechanism of an apparatus for manufacturing an electrode according to Embodiment 3 of the present invention.

The third embodiment of the present invention is different from the second embodiment in that a pattern groove is formed in an electrode by using an ultrasonically vibrating lower support part.

The contents that are duplicated with Embodiments 1 and 2 will be omitted as much as possible, and Embodiment 3 will be described with a focus on the differences. That is, it is obvious that the contents that are not described in Embodiment 3 may be regarded as the contents of Embodiments 1 and 2 if necessary.

Referring to FIG. 8, a pattern formation mechanism 310 of the apparatus for manufacturing an electrode according to Embodiment 3 of the present invention may include a roller tool 312 and a lower support part 312. In addition, the roller tool 311 may include a rotation body 311-1 and a pressing protrusion 311-2.

The rotation body 311-1 may be disposed to rotate by a predetermined distance from a coating part of the electrode. Also, the pressing protrusion 311-2 may have a protrusion shape protruding from an outer circumferential surface of the rotation body 311-1. The pressing protrusion 311-2 may be configured to form a pattern groove by pressing the coating part when the rotation body 311-1 rotates.

The lower support part 312 may be a member that supports the electrode on the lower portion of the electrode and moves in a direction F from one side to the other side with respect to the rotation body 311-1. Of course, the lower support part 312 may be fixed as necessary, but it may be more efficient if the lower support part 212 is moving rather than being fixed.

In addition, in the apparatus for manufacturing the electrode according to Embodiment 3 of the present invention, a lower support part 312 may rotate by ultrasonic waves when the pressing protrusion 311-2 forms a pattern groove in a coating part. That is, in Embodiment 2, if the pressing protrusion 311-2 vibrates by the ultrasonic waves, but in Embodiment 3, the lower support part 312 vibrates by the ultrasonic waves. A direction of the ultrasonic vibration of the lower support part 312 is illustrated as reference symbol V in FIG. 8.

### Embodiment 4

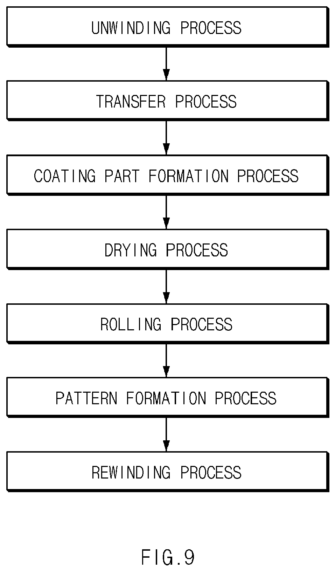

FIG. 9 is a diagram illustrating each of processes in a method for manufacturing an electrode according to Embodiment 4 of the present invention.

Embodiment 4 of the present invention is different from Embodiments 1 to 3 in that it relates to a method for manufacturing an electrode.

The contents that are duplicated with Embodiments 1 to 3 will be omitted as much as possible, and Embodiment 4 will be described with a focus on the differences. That is, it is obvious that the contents that are not described in Embodiment 4 may be regarded as the contents of Embodiments 1 to 3 if necessary.

Referring to FIG. 9, the method for manufacturing an electrode according to Embodiment 4 of the present invention may include an unwinding process, a transfer process, a coating part formation process, a drying process, a rolling process, a pattern formation process, and a rewinding process.

The unwinding process may be a process in which a roll-shaped electrode collector is unwound in an unwinder. The transfer process may be a process in which the unwound electrode collector is transferred. The coating part formation process may be a process of forming a coating part by applying an electrode active material to at least one surface of the transferred electrode collector. The drying process may be a process of drying the coating part of the electrode. The rolling process may be a process of rolling the coating part passing through the drying process. In addition, the pattern formation process may be a process of forming a pattern groove in the coating part by pressing the coating part that undergoes the rolling process through ultrasonic vibration. The rewinding process may be a process of rewinding the electrode having the pattern groove formed in the coating part by the pattern formation process.

Among them, the pattern formation process may be, specifically, a process of forming the pattern groove in the electrode including the electrode collector and the coating part made of the electrode active material applied on at least one surface of the electrode collector and pressing a surface of the coating part to form an intaglio pattern groove in the coating part.

In the method for manufacturing the electrode according to Embodiment 4 of the present invention, the pattern formation process may be performed using the ultrasonic vibration in the pattern groove formation process.

When ultrasonic vibration is applied to the applied electrode or the dried or rolled electrode, the pattern groove may be formed in the electrode in a low-pressure manner through the pattern formation mechanism. In this case, a low tortuosity cell (LTC) having reduced tortuosity may be manufactured. This means that output characteristics are improved because an electrode density on a surface of the pattern groove does not increase locally.

### Embodiment 5

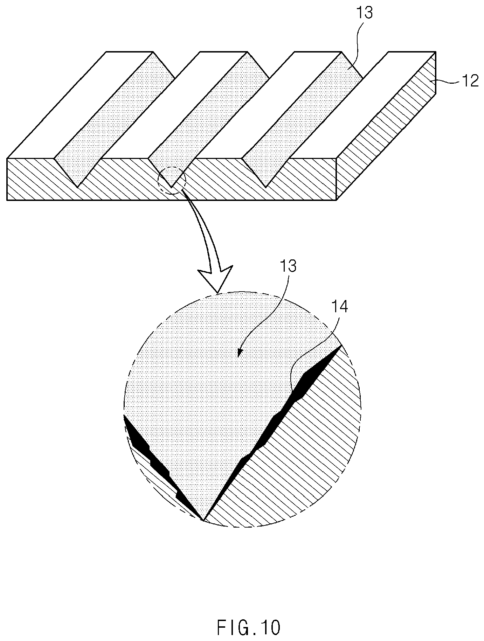

FIG. 10 is a perspective view and partially enlarged view illustrating the electrode manufactured through the apparatus for manufacturing the electrode according to an embodiment of the present invention.

Embodiment 5 of the present invention is different from Embodiments 1 to 4 in that it relates to an electrode manufactured according to the preceding embodiments.

The contents that are duplicated with Embodiments 1 to 4 will be omitted as much as possible, and Embodiment 5 will be described with a focus on the differences. That is, it is obvious that the contents that are not described in Embodiment 5 may be regarded as the contents of Embodiments 1 to 4 if necessary.

Referring to FIG. 10, an electrode 10 according to Embodiment 5 of the present invention includes an electrode collector 11 and a coating part 12 made of an electrode active material applied on at least one surface of the electrode collector 11, and an intaglio pattern groove 13 is formed in the coating part 12. Also, traces 14 generated by ultrasonic vibration of a mechanism forming the pattern groove 13 may be formed on an inner wall of the pattern groove 13.

The trace 14 of the ultrasonic vibration may include at least one of an uneven shape, a stepped stair shape, a wave pattern shape, or a zigzag shape in a cross-sectional view.

That is, when the pattern is formed by the ultrasonic waves, since a pressure applied to the electrode is reduced due to the ultrasonic wave, unlike when the pattern is formed by the rolling (simple press), the density of the electrode on the pattern surface may be lowered to improve the output characteristics.

In the electrode 10 according to Embodiment 5 of the present invention, the pattern groove 13 may have at least one shape of a line type, a dot type, or a grid type in a plan view. Specific advantages and descriptions of the case, in which the pattern groove 13 has the line shape, the dot shape, or the grid shape in the plan view, have been described in detail in the foregoing embodiment 1, and thus, detailed descriptions will be omitted in Embodiment 5.

### [Description of the Symbols]

10: Electrode
11: Electrode collector
12: Coating part
13: Pattern groove
14: Trace
110: Pattern formation mechanism
111: Press tool
111-1: Pressing plane
111-2: Pressing protrusion
112: Lower support part
120: Unwinder
130: Transfer part
140: Coater
141: Coating die
142: Coater roll
150: Drying part
160: Rolling part
161: Rolling roller
170: Rewinder
210: Pattern formation mechanism
211: Roller roll
211-1: Rotation body
211-2: Pressing protrusion
212: Lower support part
310: Pattern formation mechanism
311: Roller tool
311-1: Rotation body
311-2: Pressing protrusion
312: Lower support part
V: Vibration direction of ultrasonic wave

## Claims

1. An apparatus for manufacturing an electrode (10), the apparatus comprising:
a pattern formation mechanism (110, 210, 310) configured to form a pattern groove (13) in an electrode (10) comprising an electrode collector (11) and a coating part (12) made of an electrode active material applied on at least one surface of the electrode collector (11),
wherein the pattern formation mechanism (110, 210, 310) is configured to press a surface of the coating part (12) to form the pattern groove (13) in the coating part (12), the pattern groove (13) being an intaglio pattern groove (13),
**characterized in that** the pattern formation mechanism (110, 210, 310) is configured to use ultrasonic vibration in a process of forming the pattern groove (13).

2. The apparatus of claim 1, wherein the pattern groove (13) has at least one shape of a line type, a dot type, or a grid type in a plan view of the electrode (10).

3. The apparatus of claim 1, wherein the pattern formation mechanism (110) comprises a press tool (111) having a pressing plane (111-1) that is a plane disposed to face the coating part (12) and a pressing protrusion (111-2) protruding from the pressing plane (111-1) toward the coating part (12),
wherein the pressing protrusion (111-2) is configured to press the coating part (12) to form the pattern groove (13), and
the pressing protrusion (111-2) is configured to vibrate by the ultrasonic waves when forming the pattern groove (13).

4. The apparatus of claim 3, wherein the pattern formation mechanism (110) further comprises a lower support part (112) configured to support the electrode (10) at a lower portion of the electrode (10).

5. The apparatus of claim 1, wherein the pattern formation mechanism (210) comprises a roller tool (211) having a rotation body (211-1) configured to rotate at a position spaced a predetermined distance from the coating part (12) and a pressing protrusion (211-2) protruding from an outer circumferential surface of the rotation body (211-1),
wherein the pressing protrusion (211-2) is configured to press the coating part (12) when the rotation body (211-1) rotates to form the pattern groove (13), and
the pressing protrusion (211-2) is configured to vibrate by the ultrasonic waves when forming the pattern groove (13).

6. The apparatus of claim 5, wherein the pattern formation mechanism (210) further comprises a lower support part (212) configured to support the electrode (10) at a lower portion of the electrode (10) configured to move in a direction from one side to the other side with respect to the rotation body (211-1).

7. The apparatus of claim 1, wherein the pattern formation mechanism (310) comprises:
a roller tool (311) having a rotation body (311-1) rotating at a position spaced a predetermined distance from the coating part (12) and a pressing protrusion (311-2) protruding from an outer circumferential surface of the rotation body (311-1); and
a lower support part (312) configured to support the electrode (10) at a lower portion of the electrode (10) and moving in a direction from one side to the other side with respect to the rotation body (311-1),
wherein the pressing protrusion (311-2) presses the coating part (12) when the rotation body (311-1) rotates to form the pattern groove (13), and
the lower support part (312) is configured to vibrate by the ultrasonic waves when the pressing protrusion (311-2) forms the pattern groove (13) in the coating part (12).

8. The apparatus of claim 1, further comprising:
a roller-shaped unwinder (120) around which the electrode collector (11) is wound;
a transfer part (130) configured to transfer the electrode collector (11) unwound from the unwinder (120);
a coater (140) configured to apply an electrode active material on at least one surface of the electrode collector (11) transferred by the transfer part (130) to form a coating part (12);
a drying part (150) configured to dry the coating part (12) through a drying mechanism; and
a rolling part (160) configured to roll the coating part (12) via the drying part (150) through a pair of rollers (161),
wherein the pattern formation mechanism (110) configured to press the coating part (12) passing through the rolling part (160) through the ultrasonic vibration to form the pattern groove (13) in the coating part (12).

9. A method for manufacturing an electrode (10), the method comprising:
a pattern formation process of forming a pattern groove (13) in an electrode (10) comprising an electrode collector (11) and a coating part (12) made of an electrode active material applied on at least one surface of the electrode collector (11),
wherein the pattern formation process comprises a process of pressing a surface of the coating part (12) to form the pattern groove (13) in the coating part (12), the pattern groove (13) being an intaglio pattern groove (13),
**characterized in that** ultrasonic vibration is used in the process of forming the pattern groove (13).

10. The method of claim 9, further comprising:
an unwinding process of unwinding a roll-shaped electrode collector (11);
a transfer process of transferring the unwound electrode collector (11);
a coating part (12) formation process of applying an electrode active material on at least one surface of the electrode collector (11) being transferred to form the coating part (12);
a drying process of drying the coating part (12); and
a rolling process of rolling the coating part (12) that undergoes the drying process,
wherein the pattern formation process comprises a process of pressing the coating part (12) that undergoes the rolling process through ultrasonic waves to form the pattern groove (13) in the coating part (12).

11. An electrode (10) comprising:
an electrode collector (11); and
a coating part (12) made of an electrode active material applied on at least one surface of the electrode collector (11), and
wherein an intaglio pattern groove (13) is formed in the coating part (12),
**characterized in that** a trace (14) generated by ultrasonic vibration of a mechanism configured to form the pattern groove (13) is formed on an inner wall of the pattern groove (13).

12. The electrode (10) of claim 11, wherein the trace (14) comprises at least one of a stepped stair shape, a wave pattern shape, or a zigzag shape in a cross-sectional view.

13. The electrode (10) of claim 11, wherein the pattern groove (13) has at least one shape of a line type, a dot type, or a grid type in a plan view.

## Patentansprüche

1. Vorrichtung zur Herstellung einer Elektrode (10), wobei die Vorrichtung umfasst:
einen Musterbildungsmechanismus (110, 210, 310) der konfiguriert ist um eine Musternut (13) in einer Elektrode (10) auszubilden, die einen Elektrodenkollektor (11) und einen Beschichtungsteil (12) aus einem Elektrodenaktivmaterial umfasst, das auf mindestens eine Oberfläche des Elektrodenkollektors (11) aufgebracht ist,
wobei der Musterbildungsmechanismus (110, 210, 310) konfiguriert ist um auf eine Oberfläche des Beschichtungsteils (12) zu pressen, um die Musternut (13) in dem Beschichtungsteil (12) auszubilden, wobei die Musternut (13) eine intaglio-Musternut (13) ist,
**dadurch gekennzeichnet, dass** der Musterbildungsmechanismus (110, 210, 310) konfiguriert ist um Ultraschallschwingung in einem Prozess der Ausbildung der Musternut (13) zu verwenden.

2. Vorrichtung nach Anspruch 1, wobei die Musternut (13) in einer Draufsicht der Elektrode (10) mindestens eine Form eines Linientyps, eines Punkttyps oder eines Gittertyps aufweist.

3. Vorrichtung nach Anspruch 1, wobei der Musterbildungsmechanismus (110) ein Presswerkzeug (111) mit einer Pressebene (111-1) die eine Ebene ist, die so angeordnet ist dass sie dem Beschichtungsteil (12) zugewandt ist, und einem Pressvorsprung (111-2) der von der Pressebene (111-1) in Richtung des Beschichtungsteils (12) vorsteht, umfasst,
wobei der Pressvorsprung (111-2) konfiguriert ist um auf den Beschichtungsteil (12) zu pressen um die Musternut (13) auszubilden, und
der Pressvorsprung (111-2) konfiguriert ist um durch die Ultraschallwellen zu schwingen wenn die Musternut (13) ausgebildet wird.

4. Vorrichtung nach Anspruch 3, wobei der Musterbildungsmechanismus (110) ferner einen unteren Stützteil (112) umfasst der konfiguriert ist um die Elektrode (10) an einem unteren Abschnitt der Elektrode (10) zu stützen.

5. Vorrichtung nach Anspruch 1, wobei der Musterbildungsmechanismus (210) ein Rollenwerkzeug (211) mit einem Drehkörper (211-1) der konfiguriert ist um sich an einer Position zu drehen, die in einem vorbestimmten Abstand vom Beschichtungsteil (12) beabstandet ist und einem Pressvorsprung (211-2) der von einer äußeren Umfangsfläche des Drehkörpers (211-1) vorsteht, umfasst,
wobei der Pressvorsprung (211-2) konfiguriert ist um auf den Beschichtungsteil (12) zu pressen wenn sich der Drehkörper (211-1) dreht um die Musternut (13) auszubilden, und
der Pressvorsprung (211-2) konfiguriert ist um durch die Ultraschallwellen zu schwingen wenn die Musternut (13) ausgebildet wird.

6. Vorrichtung nach Anspruch 5, wobei der Musterbildungsmechanismus (210) ferner einen unteren Stützteil (212) umfasst der konfiguriert ist um die Elektrode (10) an einem unteren Abschnitt der Elektrode (10) zu stützen und konfiguriert ist um sich in einer Richtung von einer Seite zur anderen Seite in Bezug auf den Drehkörper (211-1) zu bewegen.

7. Vorrichtung nach Anspruch 1, wobei der Musterbildungsmechanismus (310) umfasst:
ein Rollenwerkzeug (311) mit einem Drehkörper (311-1) der sich an einer Position dreht die in einem vorbestimmten Abstand vom Beschichtungsteil (12) beabstandet ist, und einem Pressvorsprung (311-2) der von einer äußeren Umfangsfläche des Drehkörpers (311-1) vorsteht; und
einen unteren Stützteil (312) der konfiguriert ist um die Elektrode (10) an einem unteren Abschnitt der Elektrode (10) zu stützen und sich in einer Richtung von einer Seite zur anderen Seite in Bezug auf den Drehkörper (311-1) zu bewegen,
wobei der Pressvorsprung (311-2) den Beschichtungsteil (12) presst wenn sich der Drehkörper (311-1) dreht, um die Musternut (13) auszubilden, und
der untere Stützteil (312) konfiguriert ist um durch die Ultraschallwellen zu schwingen wenn der Pressvorsprung (311-2) die Musternut (13) in dem Beschichtungsteil (12) ausbildet.

8. Vorrichtung nach Anspruch 1, ferner umfassend:
einen rollenförmigen Abwickler (120) um den der Elektrodenkollektor (11) gewickelt ist;
einen Übertragungsteil (130) der konfiguriert ist um den vom Abwickler (120) abgewickelten Elektrodenkollektor (11) zu übertragen;
einen Beschichter (140) der konfiguriert ist um ein Elektrodenaktivmaterial auf mindestens eine Oberfläche des durch den Übertragungsteil (130) übertragenen Elektrodenkollektors (11) aufzubringen um einen Beschichtungsteil (12) auszubilden;
einen Trocknungsteil (150) der konfiguriert ist um den Beschichtungsteil (12) durch einen Trocknungsmechanismus zu trocknen; und
einen Walzteil (160) der konfiguriert ist um den Beschichtungsteil (12) über den Trocknungsteil (150) durch ein Paar von Walzen (161) zu walzen,
wobei der Musterbildungsmechanismus (110) konfiguriert ist um den Beschichtungsteil (12) der durch den Walzteil (160) läuft durch die Ultraschallschwingung zu pressen, um die Musternut (13) in dem Beschichtungsteil (12) auszubilden.

9. Verfahren zur Herstellung einer Elektrode (10), wobei das Verfahren umfasst:
einen Musterbildungsprozess des Ausbildens einer Musternut (13) in einer Elektrode (10) die einen Elektrodenkollektor (11) und einen Beschichtungsteil (12) aus einem Elektrodenaktivmaterial umfasst das auf mindestens eine Oberfläche des Elektrodenkollektors (11) aufgebracht ist,
wobei der Musterbildungsprozess einen Prozess des Pressens einer Oberfläche des Beschichtungsteils (12) umfasst um die Musternut (13) in dem Beschichtungsteil (12) auszubilden wobei die Musternut (13) eine Intaglio-Musternut (13) ist,
**dadurch gekennzeichnet dass** Ultraschallschwingung im Prozess der Ausbildung der Musternut (13) verwendet wird.

10. Verfahren nach Anspruch 9, ferner umfassend:
einen Abwickelprozess des Abwickelns eines rollenförmigen Elektrodenkollektors (11);
einen Übertragungsprozess des Übertragens des abgewickelten Elektrodenkollektors (11);
einen Prozess der Ausbildung eines Beschichtungsteils (12) durch Aufbringen eines Elektrodenaktivmaterials auf mindestens eine Oberfläche des übertragenen Elektrodenkollektors (11), um den Beschichtungsteil (12) auszubilden;
einen Trocknungsprozess des Trocknens des Beschichtungsteils (12); und
einen Walzprozess des Walzens des Beschichtungsteils (12) der den Trocknungsprozess durchläuft,
wobei der Musterbildungsprozess einen Prozess des Pressens des Beschichtungsteils (12) der den Walzprozess durchläuft durch Ultraschallwellen umfasst um die Musternut (13) in dem Beschichtungsteil (12) auszubilden.

11. Elektrode (10), umfassend:
einen Elektrodenkollektor (11); und
einen Beschichtungsteil (12) aus einem Elektrodenaktivmaterial das auf mindestens eine Oberfläche des Elektrodenkollektors (11) aufgebracht ist, und
wobei eine Intaglio-Musternut (13) in dem Beschichtungsteil (12) ausgebildet ist,
**dadurch gekennzeichnet dass** eine Spur (14), die durch Ultraschallschwingung eines Mechanismus erzeugt wird der konfiguriert ist um die Musternut (13) auszubilden an einer Innenwand der Musternut (13) ausgebildet ist.

12. Elektrode (10) nach Anspruch 11, wobei die Spur (14) in einer Querschnittsansicht mindestens eine von einer Stufenform, einer Wellenmusterform oder einer Zickzackform umfasst.

13. Elektrode (10) nach Anspruch 11, wobei die Musternut (13) in einer Draufsicht mindestens eine Form eines Linientyps, eines Punkttyps oder eines Gittertyps aufweist.

## Revendications

1. Appareil de fabrication d'une électrode (10), l'appareil comprenant :
un mécanisme de formation de motif (110, 210, 310) configuré pour former une rainure de motif (13) dans une électrode (10) comprenant un collecteur d'électrode (11) et une partie de revêtement (12) constituée d'un matériau actif d'électrode appliqué sur au moins une surface du collecteur d'électrode (11),
dans lequel le mécanisme de formation de motif (110, 210, 310) est configuré pour presser une surface de la partie de revêtement (12) afin de former la rainure de motif (13) dans la partie de revêtement (12), la rainure de motif (13) étant une rainure de motif en creux (13),
**caractérisé en ce que** le mécanisme de formation de motif (110, 210, 310) est configuré pour utiliser une vibration ultrasonore dans un processus de formation de la rainure de motif (13).

2. Appareil selon la revendication 1, dans lequel la rainure de motif (13) a au moins une forme d'un type linéaire, d'un type à points ou d'un type en grille dans une vue en plan de l'électrode (10).

3. Appareil selon la revendication 1, dans lequel le mécanisme de formation de motif (110) comprend un outil de pressage (111) ayant un plan de pressage (111-1) qui est un plan disposé pour faire face à la partie de revêtement (12) et une saillie de pressage (111-2) faisant saillie depuis le plan de pressage (111-1) vers la partie de revêtement (12),
dans lequel la saillie de pressage (111-2) est configurée pour presser la partie de revêtement (12) afin de former la rainure de motif (13), et
la saillie de pressage (111-2) est configurée pour vibrer par les ondes ultrasonores lors de la formation de la rainure de motif (13).

4. Appareil selon la revendication 3, dans lequel le mécanisme de formation de motif (110) comprend en outre une partie de support inférieure (112) configurée pour supporter l'électrode (10) au niveau d'une portion inférieure de l'électrode (10).

5. Appareil selon la revendication 1, dans lequel le mécanisme de formation de motif (210) comprend un outil à rouleau (211) ayant un corps de rotation (211-1) configuré pour tourner à une position espacée d'une distance prédéterminée de la partie de revêtement (12) et une saillie de pressage (211-2) faisant saillie d'une surface circonférentielle extérieure du corps de rotation (211-1),
dans lequel la saillie de pressage (211-2) est configurée pour presser la partie de revêtement (12) lorsque le corps de rotation (211-1) tourne pour former la rainure de motif (13), et
la saillie de pressage (211-2) est configurée pour vibrer par les ondes ultrasonores lors de la formation de la rainure de motif (13).

6. Appareil selon la revendication 5, dans lequel le mécanisme de formation de motif (210) comprend en outre une partie de support inférieure (212) configurée pour supporter l'électrode (10) au niveau d'une portion inférieure de l'électrode (10) configurée pour se déplacer dans une direction d'un côté à l'autre par rapport au corps de rotation (211-1).

7. Appareil selon la revendication 1, dans lequel le mécanisme de formation de motif (310) comprend :
un outil à rouleau (311) ayant un corps de rotation (311-1) tournant à une position espacée d'une distance prédéterminée de la partie de revêtement (12) et une saillie de pressage (311-2) faisant saillie d'une surface circonférentielle extérieure du corps de rotation (311-1) ; et
une partie de support inférieure (312) configurée pour supporter l'électrode (10) au niveau d'une portion inférieure de l'électrode (10) et se déplaçant dans une direction d'un côté à l'autre par rapport au corps de rotation (311-1),
dans lequel la saillie de pressage (311-2) presse la partie de revêtement (12) lorsque le corps de rotation (311-1) tourne pour former la rainure de motif (13), et
la partie de support inférieure (312) est configurée pour vibrer par les ondes ultrasonores lorsque la saillie de pressage (311-2) forme la rainure de motif (13) dans la partie de revêtement (12).

8. Appareil selon la revendication 1, comprenant en outre :
un dérouleur en forme de rouleau (120) autour duquel le collecteur d'électrode (11) est enroulé ;
une partie de transfert (130) configurée pour transférer le collecteur d'électrode (11) déroulé du dérouleur (120) ;
une machine de couchage (140) configurée pour appliquer un matériau actif d'électrode sur au moins une surface du collecteur d'électrode (11) transféré par la partie de transfert (130) pour former une partie de revêtement (12) ;
une partie de séchage (150) configurée pour sécher la partie de revêtement (12) à travers un mécanisme de séchage ; et
une partie de laminage (160) configurée pour laminer la partie de revêtement (12) via la partie de séchage (150) à travers une paire de rouleaux (161),
dans lequel le mécanisme de formation de motif (110) est configuré pour presser la partie de revêtement (12) passant à travers la partie de laminage (160) par la vibration ultrasonore pour former la rainure de motif (13) dans la partie de revêtement (12).

9. Procédé de fabrication d'une électrode (10), le procédé comprenant :
un processus de formation de motif consistant à former une rainure de motif (13) dans une électrode (10) comprenant un collecteur d'électrode (11) et une partie de revêtement (12) constituée d'un matériau actif d'électrode appliqué sur au moins une surface du collecteur d'électrode (11),
dans lequel le processus de formation de motif comprend un processus consistant à presser une surface de la partie de revêtement (12) pour former la rainure de motif (13) dans la partie de revêtement (12), la rainure de motif (13) étant une rainure de motif en creux (13),
**caractérisé en ce qu'**une vibration ultrasonore est utilisée dans le processus de formation de la rainure de motif (13).

10. Procédé selon la revendication 9, comprenant en outre :
un processus de déroulement consistant à dérouler un collecteur d'électrode en forme de rouleau (11) ;
un processus de transfert consistant à transférer le collecteur d'électrode déroulé (11) ;
un processus de formation de partie de revêtement (12) consistant à appliquer un matériau actif d'électrode sur au moins une surface du collecteur d'électrode (11) en cours de transfert pour former la partie de revêtement (12) ;
un processus de séchage consistant à sécher la partie de revêtement (12) ; et
un processus de laminage consistant à laminer la partie de revêtement (12) qui subit le processus de séchage,
dans lequel le processus de formation de motif comprend un processus consistant à presser la partie de revêtement (12) qui subit le processus de laminage par des ondes ultrasonores pour former la rainure de motif (13) dans la partie de revêtement (12).

11. Électrode (10) comprenant :
un collecteur d'électrode (11) ; et
une partie de revêtement (12) constituée d'un matériau actif d'électrode appliqué sur au moins une surface du collecteur d'électrode (11), et
dans laquelle une rainure de motif en creux (13) est formée dans la partie de revêtement (12),
**caractérisée en ce qu'**une trace (14) générée par la vibration ultrasonore d'un mécanisme configuré pour former la rainure de motif (13) est formée sur une paroi intérieure de la rainure de motif (13).

12. Électrode (10) selon la revendication 11, dans laquelle la trace (14) comprend au moins l'une parmi une forme d'escalier en gradins, une forme de motif ondulé ou une forme en zigzag dans une vue en coupe transversale.

13. Électrode (10) selon la revendication 11, dans laquelle la rainure de motif (13) a au moins une forme d'un type linéaire, d'un type à points ou d'un type en grille dans une vue en plan.
